# EUROPEAN PATENT APPLICATION

(11) **EP 4 360 898 A1**
(43) Date of publication of application: **01.05.2024**
(21) Application number: 22832545.2
(22) Date of filing: 30.03.2022
(51) Int. Cl.: B42D 5/00, B42D 9/00, B42F 21/06, G09B 5/00, G09F 3/00

(54) **STICKY NOTE FOR STUDY, STICKY NOTE SET FOR STUDY, AND COMPUTER PROGRAM**

(30) Priority: 01.07.2021 JP 2021110230; 07.09.2021 JP 2021145338
(71) Applicant: Ebbinghaus Stationery, Inc., Kobe-shi, Hyogo 650-0027 (JP)
(72) Inventor: KASHIHARA, Yui, Kobe-shi, Hyogo 655-0046 (JP)
(74) Representative: Hasegawa, Kan
(86) International application number: PCT/JP2022/015760
(87) International publication number: WO 2023/276384

(57) **Abstract**

A sticky note for learning (1) includes a sticky note (11, 12, 13) including a plurality of indicating regions (11b, 12b, 13b) that is visible in a state where the sticky note for learning is affixed to an adherend. The indicating regions (11b, 12b, 13b) indicate pieces of timing information ("2," "8," and "29") that show different timings as timings for reviews after learning.

## Description

### Technical Field

The present invention relates to a sticky note for learning and a sticky-note set for learning that are used for various types of learning and relates to a computer program for making information indicated by the sticky note for learning or the sticky-note set for learning electronically available.

### Background Art

Patent Literature 1 discloses a sticky note that is provided with removal portions to be cut off with perforations and removed from a sticky-note body, the perforations being formed in the sticky-note body. A user of this sticky note removes the removal portions as appropriate in a course of learning, so that the user can visually check, for example, presence or absence of a review to be performed.

### Citation List

### Patent Literature

Patent Literature 1: Japanese Utility Model Registration No. 3216340

### Summary of Invention

### Technical Problem

The conventional sticky note described above enables checking whether a review has been performed. However, there is a problem with the conventional sticky note in that an appropriate timing for the review cannot be checked.

The present invention is made in view of such circumstances, and a principal objective of the present invention is to provide a sticky note for learning and a sticky-note set for learning with which the problem described above can be solved and to provide a computer program for making information indicated by the sticky note for learning or the sticky-note set for learning electronically available.

### Solution to Problem

To solve the problem described above, a sticky note for learning according to one aspect of the present invention includes a sticky note including a plurality of indicating regions that is visible in a state where the sticky note for learning is affixed to an adherend. The indicating regions indicate pieces of timing information that show different timings as timings for reviews after learning.

In the aspect, the indicating regions may each indicate a piece of timing information that shows a lapse time point from a start time point of learning.

In the aspect, the sticky note may include a sticky-note body and a plurality of separable portions that is coupled to the sticky-note body, the separable portions being separable one by one from the sticky-note body, and the separable portions may include the respective indicating regions.

In the aspect, the indicating region of each separable portion may indicate a piece of timing information that shows a timing later than a timing shown by a piece of timing information indicated by the indicating region of the separable portion that is to be separated earlier than the each separable portion.

In the aspect, the separable portions may be arranged in order in a longitudinal direction of the sticky note for learning, and a length of the sticky note for learning may be shortened as the separable portions are separated one by one.

In the aspect, the separable portions may be each separable with a perforation.

In the aspect, the indicating regions may be demarcated by guides for folds, by folding the sticky note downward sequentially along the folds, the indicating regions may be made invisible one by one accordingly, and each indicating region may indicate a piece of timing information that shows a timing later than a timing shown by a piece of timing information indicated by the indicating region that is to be made invisible earlier than the each indicating region.

In the aspect, the indicating regions may be arranged in order in a longitudinal direction of the sticky note for learning, and a length of the sticky note for learning may be shortened as the sticky note is folded downward sequentially along the folds.

A sticky-note set for learning according to one aspect of the present invention includes a plurality of the sticky notes for learning according to the aspect described above, and the sticky notes for learning are arranged being visible and each have the indicating regions indicating the pieces of timing information that show timings different from one another.

A computer program according to one aspect of the present invention is a computer program that causes a computer to read information indicated by a sticky note for learning, wherein the sticky note for learning includes a sticky note including a plurality of indicating regions that is visible in a state where the sticky note is affixed to an adherend, the indicating regions indicate respective pieces of timing information that show different timings as timings for reviews after learning, and the computer program causes the computer to function as: a receiving unit that receives an input of the pieces of timing information indicated by the indicating regions; and a display unit that displays the received pieces of timing information.

In the aspect, the computer may include an image pickup device, and the receiving unit may receive the input by reading, using the image pickup device, the pieces of timing information indicated by the indicating regions.

In the aspect, the computer program may further cause the computer to function as a sending unit that sends the received pieces of timing information to an external device.

In the aspect, the receiving unit may further receive an input of adherend information that is indicated by the adherend, and the display unit may display the received adherend information in an associated manner with the pieces of timing information.

In the aspect, the receiving unit may repeatedly receive an input of the pieces of timing information, and the computer program may further cause the computer to function as a recognizing unit that recognizes a state of progress of a review based on a plurality of the received pieces of timing information.

### Advantageous Effect of Invention

According to the present invention, a sticky note for learning that enables achievement of a high learning effectiveness and provides a high usability can be provided.

### Brief Description of Drawings

[Figure 1] Figure 1 is a perspective view illustrating a configuration of a sticky note for learning according to Embodiment 1.
[Figure 2] Figure 2 is a plan view illustrating the configuration of the sticky note for learning according to Embodiment 1.
[Figure 3] Figure 3 is a plan view for describing indicating regions.
[Figure 4] Figure 4 is a plan view illustrating changes with time in removing separable portions one by one.
[Figure 5] Figure 5 is a plan view illustrating a state where a sticky note is affixed to a specified page in a book.
[Figure 6] Figure 6 is a plan view illustrating another example of the configuration of the sticky note for learning according to Embodiment 1.
[Figure 7] Figure 7 is a plan view illustrating a configuration of a sticky-note set for learning according to Embodiment 2.
[Figure 8] Figure 8 is a side view illustrating the configuration of the sticky-note set for learning according to Embodiment 2.
[Figure 9] Figure 9 is a block diagram illustrating a configuration of a computer system according to Embodiment 3.
[Figure 10] Figure 10 is a plan view illustrating a configuration of a sticky note for learning in another embodiment.
[Figure 11] Figure 11 is a plan view illustrating a state where a sticky note is affixed to a bookmark.
[Figure 12] Figure 12 is a perspective view illustrating a configuration of a sticky note for learning according to Embodiment 4.
[Figure 13] Figure 13 is a perspective view illustrating another configuration of the sticky note for learning according to Embodiment 4.
[Figure 14] Figure 14 is a perspective view illustrating a configuration of a sticky note for learning according to Embodiment 5.
[Figure 15] Figure 15 is a perspective view illustrating an example of use of the sticky note for learning according to Embodiment 5.
[Figure 16] Figure 16 is a perspective view illustrating the example of use of the sticky note for learning according to Embodiment 5.
[Figure 17] Figure 17 is a plan view illustrating a configuration of a sticky note for learning in another embodiment.
[Figure 18] Figure 18 is a block diagram illustrating a configuration of a computer system in another embodiment.

### Description of Embodiments

Preferred embodiments of the present invention will be described below with reference to the drawings. It should be noted that the embodiments described below are for exemplifying devices and methods for embodying a technical concept of the present invention, and the following should not be construed as limiting the technical concept of the present invention. The technical concept of the present invention can be variously modified within the technical scope described in the claims.

### (Embodiment 1)

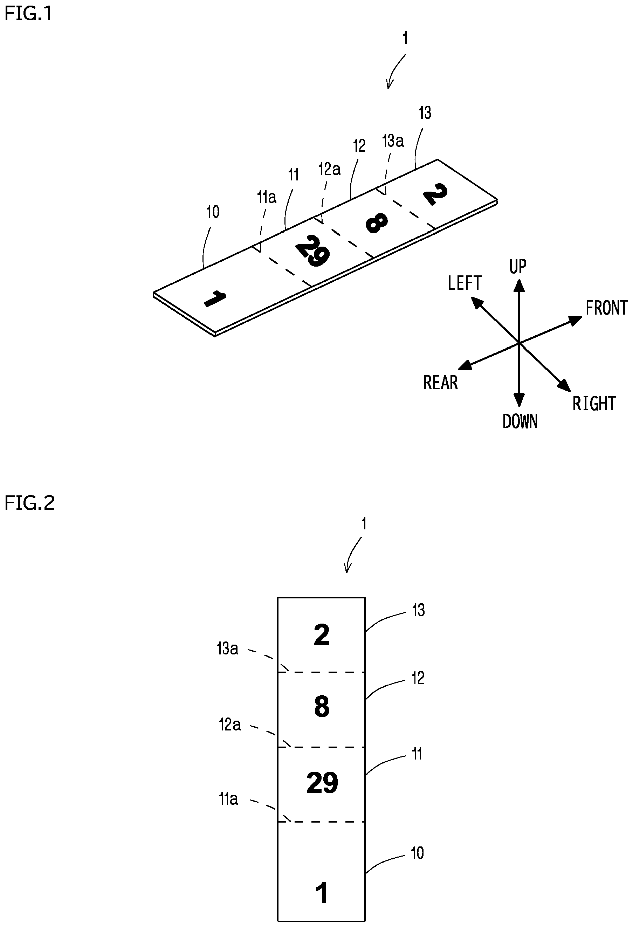

Figure 1 is a perspective view illustrating a configuration of a sticky note for learning (hereinafter, will be simply referred to as a "sticky note") according to Embodiment 1. Figure 2 is a plan view illustrating the configuration of the sticky note. In Figure 1, directions from the sticky note are indicated by arrows. As illustrated in Figure 1 and Figure 2, a sticky note 1 has a long rectangular shape that generally extends in a front-rear direction. The sticky note 1 includes a sticky-note body 10, a first separable portion 11, a second separable portion 12, and a third separable portion 13 in this order from a rear side of the sticky note 1. Adhesive is applied to a rear-end portion of a lower surface (back surface) of the sticky-note body 10. With the applied agent, the sticky note 1 is to be attached to an adherend such as a book.

The sticky-note body 10, the first separable portion 11, the second separable portion 12, and the third separable portion 13 are made of a paper material, a resin material, or the like. Between the sticky-note body 10 and the first separable portion 11, between the first separable portion 11 and the second separable portion 12, and between the second separable portion 12 and the third separable portion 13, three perforations 11a, 12a, and 13a each extending in a width direction (a right-left direction) are formed, respectively. The third separable portion 13 is to be separated from the second separable portion 12 with the perforation 13a, the second separable portion 12 is to be separated from the first separable portion 11 with the perforation 12a, and the first separable portion 11 is to be separated from the sticky-note body 10 with the perforation 11a. In this manner, the first separable portion 11 to the third separable portion 13 are made such that the first separable portion 11 to the third separable portion 13 can be separated one by one from the sticky-note body 10.

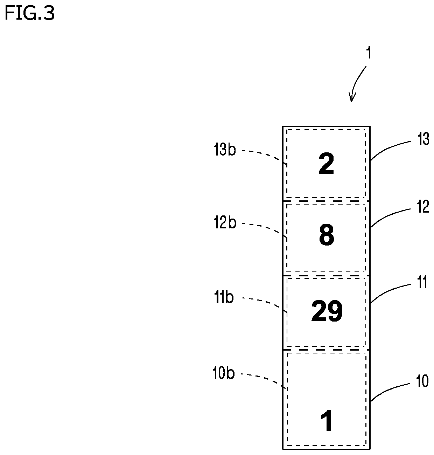

The sticky-note body 10, the first separable portion 11, the second separable portion 12, and the third separable portion 13 include indicating regions that are visible in the state where the sticky-note body 10 is affixed to the adherend. Figure 3 is a plan view for describing the indicating regions. As illustrated in Figure 3, the entire surfaces of front surfaces of the sticky-note body 10, the first separable portion 11, the second separable portion 12, and the third separable portion 13 serve as indicating regions 10b, 11b, 12b, and 13b, respectively.

The indicating regions 11b to 13b each indicate a piece of timing information that shows a timing for learning. In the case of the present embodiment, the piece of timing information is a piece of information that shows a lapse time point from a specific time point (hereinafter, will be referred to as a "start time point"). Specifically, as the pieces of timing information, pieces of information that show a time point after a lapse of one day from the start time point, a time point after a lapse of one week from the start time point, and a time point after a lapse of four weeks from the start time point are used.

In the present embodiment, the indicating region of each separable portion indicates a piece of timing information that shows a time point later than a timing shown by a piece of timing information indicated by the indicating region of the separable portion that is to be separated earlier than the each separable portion. Therefore, a piece of timing information showing a time point after a lapse of one day from the start time point is indicated by an indicating region 11b of the first separable portion 11, a piece of timing information showing a time point after a lapse of one week from the start time point is indicated by an indicating region 12b of the second separable portion 12, and a piece of timing information showing a time point after a lapse of four weeks from the start time point is indicated by an indicating region 13b of the third separable portion 13.

The pieces of timing information are given to the first separable portion 11 to the third separable portion 13 with one of various types of means. For example, the pieces of timing information are given by being printed directly onto the first separable portion 11 to the third separable portion 13 or by affixing stickers with the pieces of timing information printed thereon to the first separable portion 11 to the third separable portion 13. Alternatively, the pieces of timing information may be given with handwriting or the like of a user of the sticky note 1.

The indicating region 10b of the sticky-note body 10 indicates "1." In the present embodiment, this "1" corresponds to the start time point described above and means "the first day" of each month.

The indicating region 13b of the third separable portion 13 indicates "2" as the piece of the timing information. This "2" means a day after a lapse of one day from the start time point, that is, "the second day."

The indicating region 12b of the second separable portion indicates "8" as the piece of the timing information. This "8" means a day after a lapse of one week from the start time point, that is, "the eighth day."

The indicating region 11b of the first separable portion 11 indicates "29" as the piece of the timing information. This "29" means a day after a lapse of four weeks from the start time point, that is, "the 29th day."

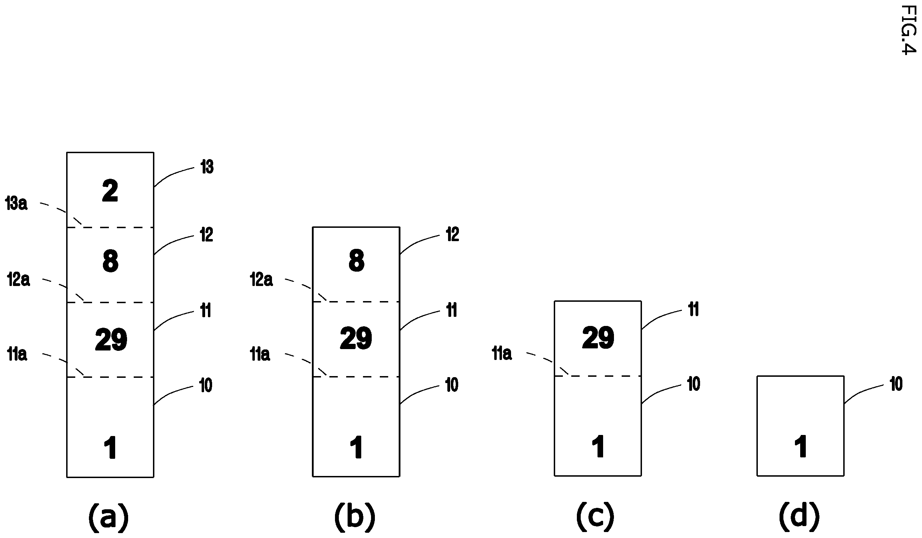

Figure 4 is a plan view illustrating changes with time in removing the separable portions one by one. Figure 4(a) illustrates a state where the first separable portion 11 to the third separable portion 13 are not separated, (b) illustrates a state where the third separable portion 13 is separated, (c) illustrates a state where the second separable portion 12 is then separated, and (d) illustrates a state where the first separable portion 11 is then separated.

As illustrated in Figure 4(a), in the state where the first separable portion 11 to the third separable portion 13 are not separated, "1" on the sticky-note body 10, "29" on the first separable portion 11, "8" on the second separable portion 12, and "2" on the third separable portion 13 are visible. As illustrated in Figure 4(b), after the third separable portion 13 is separated, "1" on the sticky-note body 10, "29" on the first separable portion 11, and "8" on the second separable portion 12 are visible. After the second separable portion 12 is then separated, as illustrated in Figure 4(c), "1" on the sticky-note body 10 and "29" on the first separable portion 11 are visible. After the first separable portion 11 is then separated, as illustrated in Figure 4(d), only "1" on the sticky-note body 10 is visible.

A usage of the sticky note 1 will be described below. A case where a user of the sticky note 1 (a learner) starts learning on the first day, at the beginning of a month, will be exemplified here. The learner performs the learning with a book. At this time, the learner specifies a page on which a review needs to be performed from among pages on which learning has been performed in the book, and the learner affixes the sticky note 1 to the specified page. In this case, the sticky note 1 is affixed to the page with the adhesive applied to the rear-end portion of the lower surface of the sticky-note body 10.

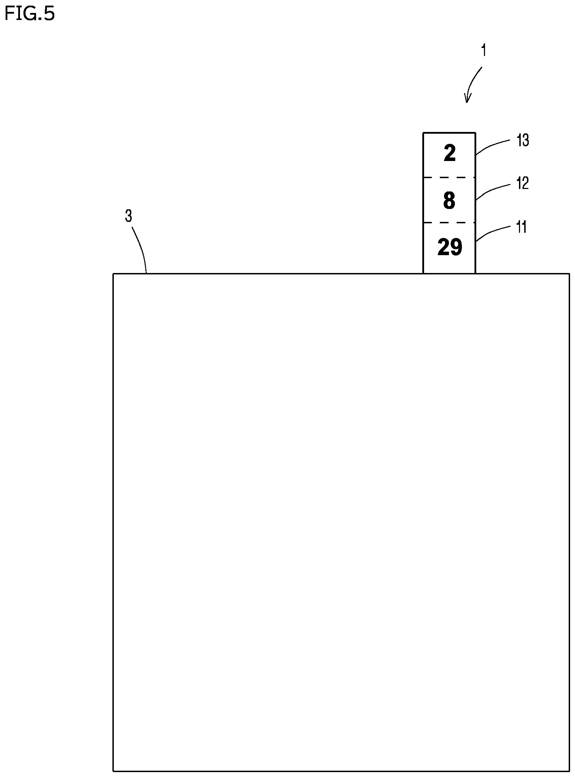

Figure 5 is a plan view illustrating a state where the sticky note 1 is affixed to the specified page in the book as described above. In this state, as illustrated in Figure 5, while a front side (an upper side in the drawing) of the sticky note 1 is exposed to the outside of a book 3, a rear side (a lower side in the drawing) of the sticky note 1 is covered with a page in the book 3. As a result, "29" on the first separable portion 11, "8" on the second separable portion 12, and "2" on the third separable portion 13 are visible. At the same time, "1" (the start time point) on the sticky-note body 10 is invisible from the outside.

Referring to the sticky note 1 affixed to the book 3, the learner can easily grasp timings for a review. When "2" on the third separable portion 13 is visible as illustrated in Figure 5, the learner can confirm that a review needs to be performed on the second day of the month. Thus, on the second day of the month, the learner opens the page to which the sticky note 1 is affixed. At this time, "1" on the sticky-note body 10 is visible, and the learner can grasp that the review is a review of learning that was started on the first day. The learner performs the review of the page and then separates the third separable portion 13 from the second separable portion 12 with the perforation 13a.

After the third separable portion 13 is separated as described above, a state where "29" on the first separable portion 11 and "8" on the second separable portion 12 are visible is maintained. Therefore, the learner can confirm that a next review needs to be performed on the eighth day of the month. Thus, on the eighth day of the month, the learner opens the page to which the sticky note 1 is affixed. At this time, "1" on the sticky-note body 10 is visible, and the learner can grasp that the review is the review of learning that was started on the first day. The learner performs the review on the page and then separates the second separable portion 12 from the first separable portion 11 with the perforation 12a.

After the second separable portion 12 is separated as described above, a state where "29" on the first separable portion 11 is visible is maintained. Therefore, the learner can confirm that a next review needs to be performed on the 29th day of the month. Thus, on the 29th day of the month, the learner opens the page to which the sticky note 1 is affixed. At this time, "1" on the sticky-note body 10 is visible, and the learner can grasp that the review is the review of learning that was started on the first day. The learner performs the review on the page and then separates the first separable portion 11 with the perforation 11a. Accordingly, indications of all the pieces of timing information are removed.

In this manner, in the present embodiment, the review is performed three times in total, after the lapse of one day, the lapse of one week, and the lapse of four weeks from the start date of the learning. These are review timings determined based on the Ebbinghaus' forgetting curve. Using the sticky note according to the present embodiment makes it easy to repeat a review at appropriate timings. As a result, it is possible to increase a rate of retention of a learned knowledge.

The first separable portion 11 to the third separable portion 13 are arranged in order in a longitudinal direction of the sticky note 1. Therefore, as illustrated in Figure 4, the overall length of the sticky note 1 is shortened as the first separable portion 11 to the third separable portion 13 are separated one by one. Checking these visual changes together with the pieces of timing information, the learner can grasp a state of performing the reviews and the like.

Separating the first separable portion 11 as described above brings about a state where only the sticky-note body 10 is affixed to the book 3. Maintaining this state makes it possible to check for reviewed pages and the like. In the case where such a check is not needed, the sticky-note body 10 may be removed from the book 3 when or after the first separable portion 11 is separated. Alternatively, the first separable portion 11 and the sticky-note body 10 may be integrally formed without the provision of the perforation 11a, and after the reviews are performed, both the first separable portion 11 and the sticky-note body 10 may be removed from the book 3 at once.

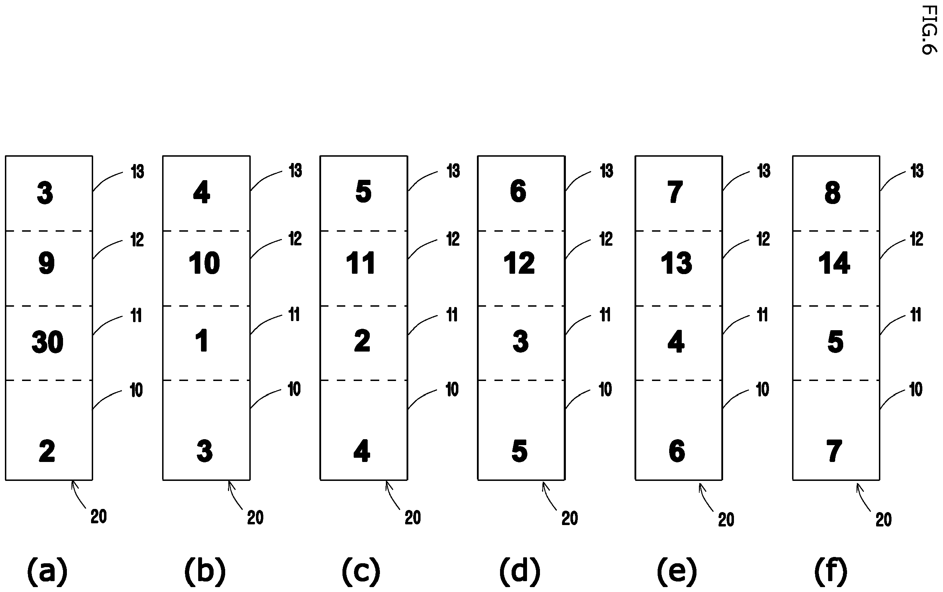

The sticky note 1 according to the present embodiment is a sticky note for a case where the start time point is the first day of a month. However, it should be appreciated that the present invention is not limited to the case. The sticky note 1 may be a sticky note for a start time point that is one of the second day to the seventh day as illustrated in Figures 6(a) to (f). In this case also, pieces of information that show a time point after a lapse of one day from the start time point, a time point after a lapse of one week from the start time point, and a time point after a lapse of four weeks from the start time point are used as the pieces of timing information. Naturally, the start time point can be set to the eighth day or later.

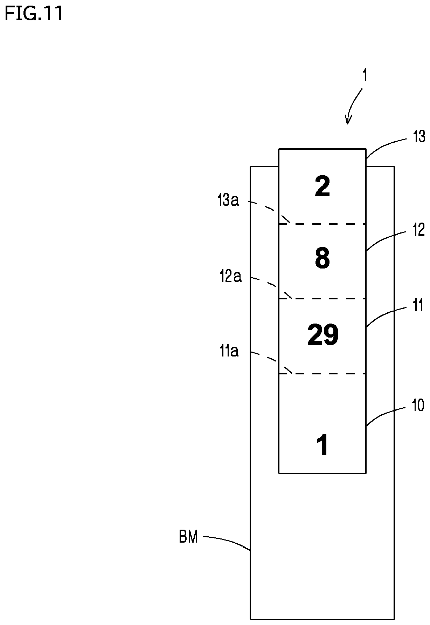

In the present embodiment, as described above, the example in which the sticky note 1 is affixed to the book 3 is described. In addition, there are various possible examples of use of the sticky note 1. For example, the sticky note 1 can be affixed to a bookmark that is to be inserted between pages in a book. Figure 11 is a plan view illustrating a state where the sticky note 1 is affixed to the bookmark in such a manner. As illustrated in Figure 11, the sticky note 1 is affixed to a surface of a bookmark BM. The sticky note 1 is affixed in a freely-selected region on the surface of the bookmark BM. The sticky note 1 may be affixed to the bookmark with adhesive applied to a portion of the back surface of the sticky note 1 (e.g., the rear-end portion of the sticky-note body 10) or may be affixed to the bookmark with adhesive applied to the entire surface of the back surface.

The bookmark BM to which the sticky note 1 is affixed is inserted between a page on which a review needs to be performed in the book and a page previous or next to the page. Accordingly, the sticky note 1 can be used in the same manner as in the case where the sticky note 1 is affixed to a page in the book.

### (Embodiment 2)

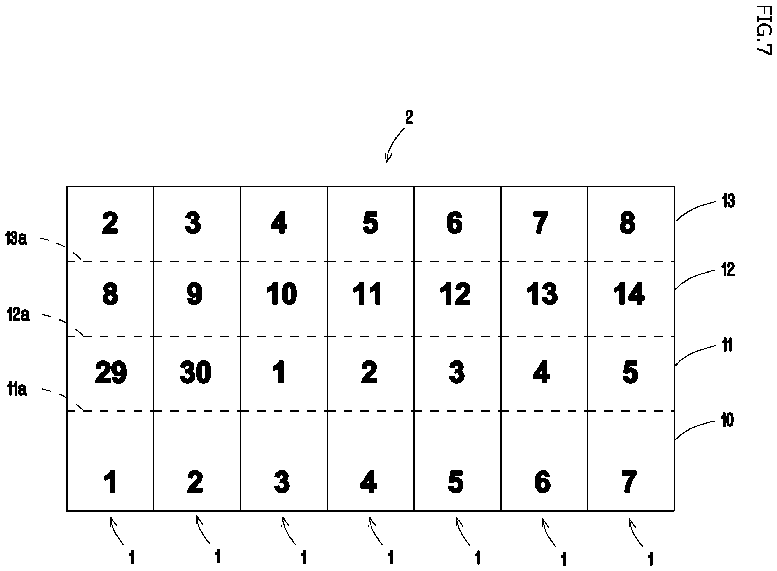

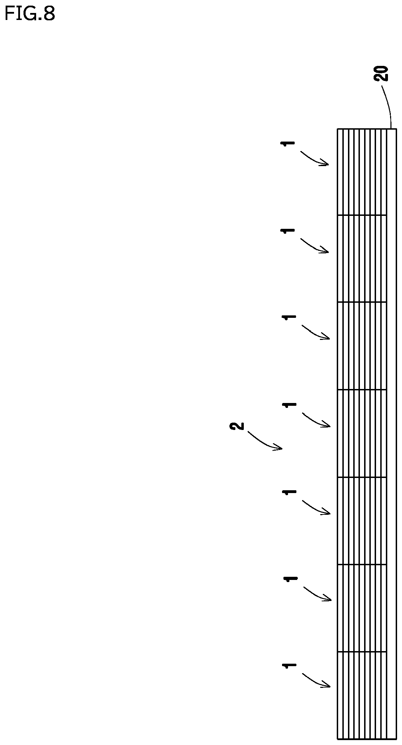

The present embodiment is a sticky-note set that includes a plurality of the sticky notes according to Embodiment 1. Figure 7 is a plan view illustrating a configuration of the sticky-note set. Figure 8 is a side view of the sticky-note set when viewed from a lower side of the plan view in Figure 7.

As illustrated in Figure 7 and Figure 8, a sticky-note set 2 includes seven sticky notes 1 that are provided being arranged in a right-left direction. The sticky notes 1 have their start time points that are the first day to the seventh day. As illustrated in Figure 8, pluralities of sticky notes 1 are stacked in an up-down direction. Each of the pluralities of sticky notes 1 stacked indicates the same start time point and the same set of pieces of timing information. That is, for example, the sticky notes 1 stacked at a leftmost position each indicate the start time point "1," and the pieces of timing information "2," "8," and "29."

Adhesive is applied to a rear-end portion of a lower surface of each sticky note 1. With the adhesive, the sticky notes 1 stacked are detachably attached to each other. In addition, a lowermost sticky note 1 is attached to a board 20.

As described above, in the case of the sticky-note set 2, the seven sticky notes 1 arranged in the right-left direction are visibly provided. Therefore, indicating regions included in the sticky notes 1 are visible. The indicating regions included in the sticky notes 1 indicate start time points different from one another and sets of pieces of timing information different from one another.

A usage of the present embodiment will be described below. Note that description of the same details as those in Embodiment 1 will be omitted as appropriate. After performing learning with a book, a learner specifies a page on which a review needs to be performed from among pages on which learning has been performed in the book, and the learner affixes a sticky note 1 of the sticky-note set 2 to the page.

At this time, the learner selects a sticky note 1 suitable for a date of the learning from among the seven sticky notes 1 arranged in the right-left direction. For example, in the case where the date of the learning is the first day, a sticky note 1 with the start time point "1" is selected.

In the case of the present embodiment, the seven sticky notes 1 arranged in the right-left direction are given start time points different from one another and pieces of timing information different from one another, thus allowing a glimpse of the start time points and the pieces of timing information. Therefore, the learner can easily specify a sticky note 1 needed and thus can prepare for a review smoothly.

In the present embodiment, the seven sticky notes 1 are arranged in the right-left direction. However, this is not limiting. The number of the sticky notes 1 arranged may be any number equal to or greater than two. In addition, the direction of the arrangement is not limited to the right-left direction and may be the front-rear direction or the like.

### (Embodiment 3)

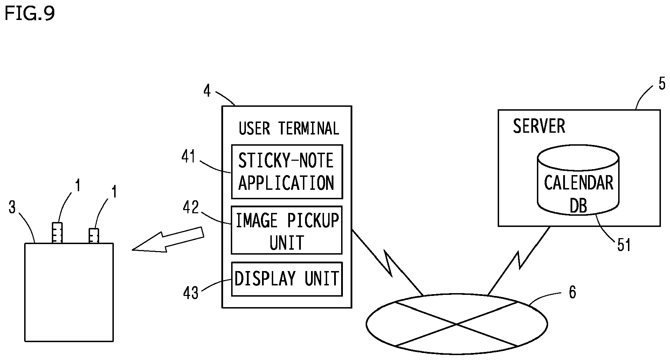

Embodiment 3 is a computer system for making pieces of timing information indicated by the sticky notes described above available as electronic data. Figure 9 is a block diagram illustrating a configuration of the computer system. As illustrated in Figure 9, the present system includes a user terminal 4 that is used by a learner and a server 5 that is capable of communicating with the user terminal 4 via an Internet 6.

The user terminal 4 is configured as an information terminal such as a smartphone or a tablet computer. The user terminal 4 includes a storage device that stores a program 41 for making efficient use of pieces of timing information indicated by a sticky note according to the present invention (here, the sticky note 1 according to Embodiment 1 is exemplified). Hereinafter, the program will be referred to as a sticky-note application. The sticky-note application 41 is a program that is installed in advance in the user terminal 4 by the learner. However, this is not limiting. The sticky-note application 41 may be configured by a script or the like executed in a web browser.

The user terminal 4 includes an image pickup unit 42 and a display unit 43. The image pickup unit 42 includes an image pickup element such as a CCD or a CMOS. The display unit 43 includes a liquid crystal display, an organic electro-luminescence display, or the like.

The sticky-note application 41 is a program that performs calendar management in cooperation with the server 5. The server 5 stores calendar information including a schedule and the like of the learner in a calendar DB 51 and sends the calendar information to the user terminal 4 in response to a request from the user terminal 4. With the user terminal 4 displaying the calendar information obtained from the server 5 on the display unit 43, the learner can check the learner's own schedule and the like.

Operation of the user terminal 4 and the server 5 by the learner using a sticky note 1 will be described below. When performing learning with the book 3, the learner affixes a sticky note 1 to a page on which a review needs to be performed. The learner then operates the user terminal 4 to launch the sticky-note application 41. The operation of the user terminal 4 described below is implemented by the sticky-note application 41.

According to the sticky-note application 41, the user terminal 4 obtains, with the image pickup unit 42, a picked-up image of the sticky note 1 affixed to the book 3. Next, the user terminal 4 performs image processing on the obtained picked-up image to extract pieces of timing information indicated by the sticky note 1 and sends the pieces of timing information to the server 5.

The server 5 stores the pieces of timing information received from the user terminal 4 in the calendar DB 51. Afterward, in response to a request from the user terminal 4, the server 5 sends the calendar information including the pieces of timing information to the user terminal 4.

The user terminal 4 displays the calendar information on the display unit 43. At this time, the calendar information includes the pieces of timing information. Thus, by referring to the display on the display unit 43, the learner can check at what timing a review needs to be performed. In this manner, with the sticky-note application 41, the learner can grasp timings for a review even when the book 3 is not close at hand.

In the present embodiment, the extraction of the pieces of timing information from the picked-up image is performed on the user terminal 4 side. However, the user terminal 4 may provide the picked-up image to the server 5, and then the server 5 may extract the pieces of timing information from the picked-up image.

In the present embodiment, the pieces of timing information indicated by the sticky note 1 are extracted from the picked-up image obtained by the image pickup unit 42. However, this is not limiting. For example, the user terminal 4 may obtain the pieces of timing information by the learner inputting the pieces of timing information indicated by the sticky note 1 into the user terminal 4. In this case, the learner may manually input the pieces of timing information using an input device included in the user terminal 4, such as a touch panel, or may input the pieces of timing information in the form of voice using a voice recognition function provided in the user terminal 4.

The pieces of timing information input into the user terminal 4 in the above-described manner is sent to the server 5 as in the present embodiment. The user terminal 4 then obtains the pieces of timing information from the server 5 and displays the pieces of timing information on the display unit 43. By referring to the display, the learner can check at what timing a review needs to be performed.

In the above description, the pieces of timing information are sent from the user terminal 4 to the server 5. However, this is not limiting. When the user terminal 4 obtains the pieces of timing information with the image pickup unit 42, the input device described above, or the like, the user terminal 4 may store the pieces of timing information in a storage unit of the user terminal 4. Thereafter, the user terminal 4 may read the pieces of timing information from the storage unit and display the pieces of timing information on the display unit 43 as necessary. That is, the sticky-note application 41 may be a program that causes the user terminal 4 to perform the calendar management by itself, rather than a program that performs the calendar management in cooperation with the server 5.

### (Embodiment 4)

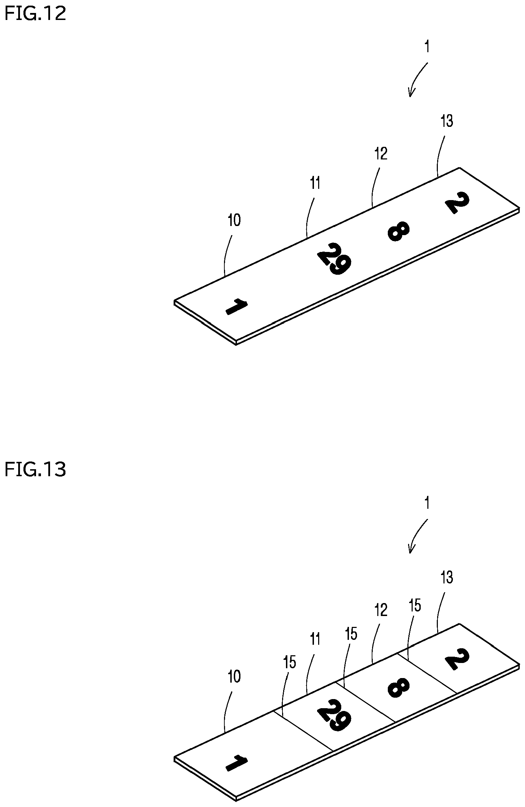

The embodiments described above are provided with the configuration in which each separable portion is to be separated with a perforation. In contrast, in the present embodiment, no perforations are provided. For example, in the case of a sticky note 1 according to the present embodiment illustrated in Figure 12, no guides are provided between a sticky-note body 10, a first separable portion 11, a second separable portion 12, and a third separable portion 13. In this case, a learner separates the first separable portion 11 after holding the first separable portion 11 and the second separable portion 12 with the learner's right hand and left hand. This holds true for the case where other separable portions are separated.

Figure 13 illustrates another configuration of the sticky note 1 according to Embodiment 4. In the case of this example, lines 15 are provided between a sticky-note body 10, a first separable portion 11, a second separable portion 12, and a third separable portion 13 by printing or the like. In this case, a learner separates the first separable portion 11 using a line 15 as a guide after holding the first separable portion 11 and the second separable portion 12 with the learner's right hand and left hand, as described above. This holds true for the case where other separable portions are separated. Although Figure 13 exemplifies the case where the lines 15 are solid lines, the lines 15 may be broken lines or the like.

### (Embodiment 5)

In the embodiments described above, the indicating regions indicating pieces of timing information are provided on the separable portions. In contrast, in the present embodiment, the indicating regions are used without separation. A configuration for this will be described below.

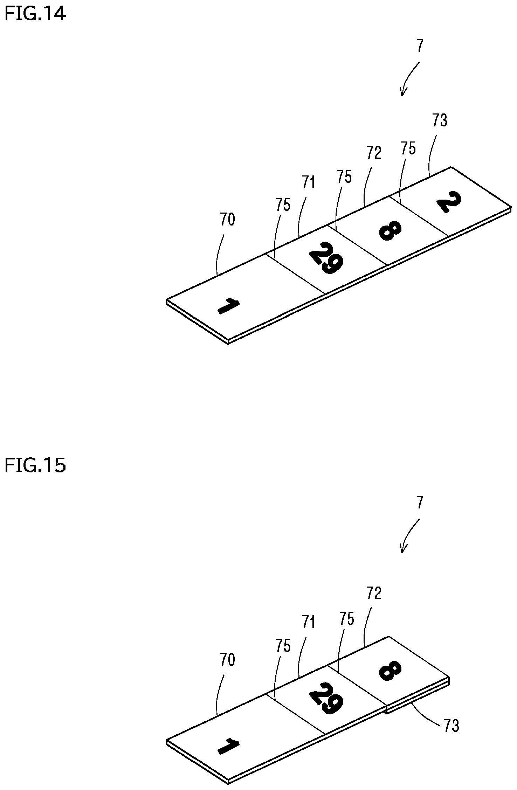

Figure 14 is a perspective view illustrating a configuration of a sticky note according to Embodiment 5. As illustrated in Figure 14, a sticky note 7 has a long rectangular shape that generally extends in a front-rear direction as with the sticky note 1 in the embodiments described above. The sticky note 7 includes a sticky-note body 70, a first indicating-region portion 71, a second indicating-region portion 72, and a third indicating-region portion 73 in this order from a rear side of the sticky note 7. The first indicating-region portion 71, the second indicating-region portion 72, and the third indicating-region portion 73 include indicating regions that indicate pieces of timing information, as with the first separable portion 11, the second separable portion 12, and the third separable portion 13 in the embodiments described above.

Between the sticky-note body 70, the first indicating-region portion 71, the second indicating-region portion 72, and the third indicating-region portion 73, lines 75 are provided by printing or the like. The indicating regions are demarcated by the lines 75. The lines 75 function as guides for folds as will be described later. The lines 75 may be solid lines, broken lines, or the like as in

### Embodiment 4.

Next, a usage of the sticky note 7 will be described. Note that the same points as in the embodiments described above will be omitted as appropriate. Referring to the sticky note 7 affixed to a book, a bookmark, or the like, a learner can grasp timings for a review. When a day indicated by the third indicating-region portion 73 is reached, the learner performs the review and then folds the third indicating-region portion 73 downward using, as a fold, a line 75 provided between the third indicating-region portion 73 and the second indicating-region portion 72. This makes the third indicating-region portion 73 invisible as illustrated in Figure 15. Next, when a day indicated by the second indicating-region portion 72 is reached, the learner performs the review and then folds the second indicating-region portion 73 downward using, as a fold, a line 75 provided between the second indicating-region portion 72 and the first indicating-region portion 71. This makes the second indicating-region portion 72 also invisible as illustrated in Figure 15. The first indicating-region portion 71 may be folded downward thereafter. Alternatively, for example, the entire sticky note 7 may be peeled off with the first indicating-region portion 71 not folded downward.

In this manner, by folding the indicating-region portions downward one by one, the indication of the pieces of timing information is controlled in the same manner as in the embodiments described above. This makes it possible for the learner to easily grasp the timings for a review, thus enabling achievement of a high learning effectiveness.

Note that adhesive may be applied to a front portion of a back surface of the sticky note 7, and each indicating-region portion folded downward in the above-described manner may be fixed to the back surface of the sticky note 7 with the adhesive. As a result, each indicating-region portion folded downward is prevented from interfering with a page in a book, another sticky note, or the like.

### (Other embodiments)

In the embodiments described above, days determined based on the Ebbinghaus' forgetting curve are used as the pieces of timing information. However, the pieces of timing information may be pieces of information of another type that show timings at which a review needs to be performed. For example, times of day or the like can be used as the pieces of timing information. Alternatively, pieces of information such as days that are unconnected to the forgetting curve described above may be used as the pieces of timing information.

In the embodiments described above, the start time points are indicated by sticky-note pieces. However, the start time points may be indicated by only one of some of sticky-note pieces, such as topmost sticky-note pieces, or the start time points may be indicated by no sticky-note pieces.

A shape of sticky-note pieces forming the sticky notes is not limited to a rectangular shape. Any shape such as a round shape, a star shape, or a heart shape can be adopted as the shape of the sticky-note pieces.

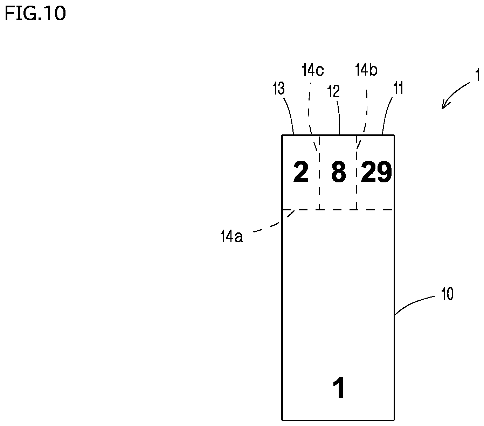

In the embodiments described above, the first separable portion 11 to the third separable portion 13 are arranged in this order in the longitudinal direction of the sticky note 1. However, this is not limiting. For example, Figure 10 illustrates a configuration in which a first separable portion 11 to a third separable portion 13 are arranged in this order in a width direction of a sticky note 1. In the present modification, a perforation 14a is formed between a sticky-note body 10 and the first separable portion 11 to the third separable portion 13, and additionally, perforations 14b and 14c are formed between the first separable portion 11 and the second separable portion 12 and between the second separable portion 12 and the third separable portion 13, respectively. In this case also, the third separable portion 13 to the first separable portion 11 can be separated in this order as in Embodiments 1 and 2 described above, and the same usage as in Embodiments 1 and 2 can be implemented.

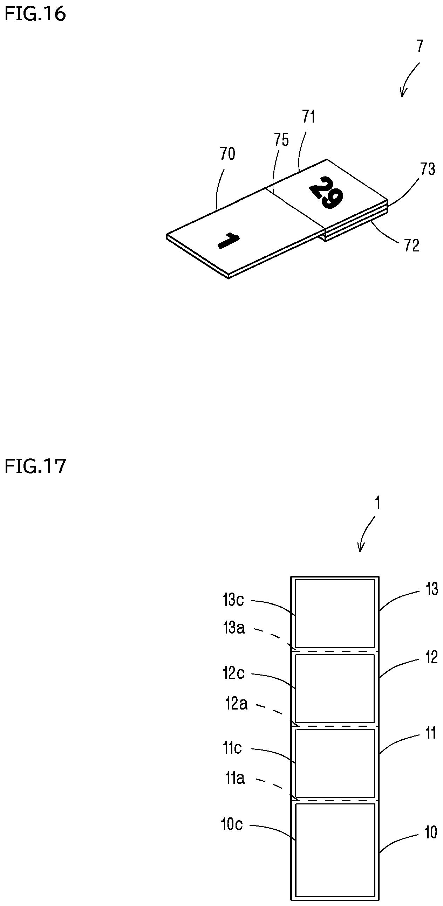

On the first separable portion 11 to the third separable portion 13 or the first indicating-region portion 71 to the third indicating-region portion 73 in the embodiments described above, marks that clearly indicate the indicating regions may be given. The marks indicate regions that are given the pieces of timing information. For example, as illustrated in Figure 17, frame borders 10c to 13c that indicate the indicating regions may be provided to the first separable portion 11 to the third separable portion 13. The frame borders may be solid lines, broken lines, or the like. A shape of the frame borders may be a rectangular shape or another shape (e.g., a round shape, etc.). Alternatively, marks other than the frame borders (e.g., arrows pointing to the indicating regions, etc.) may be given.

In the case of the configuration described above, the pieces of timing information are likely to be given by handwriting within the frame borders 10c to 13c by a learner. Alternatively, the pieces of timing information may be given by affixing, within the frame borders 10c to 13c, stickers with the pieces of timing information printed thereon.

In the embodiments described above, back surfaces of the sticky notes 1 and 7 are provided with no indicating regions for the pieces of timing information. However, the back surfaces may be provided with the indicating regions. For example, the back surfaces of the sticky notes 1 and 7 may be each provided with the same indicating regions as those on front surfaces of the sticky notes 1 and 7, and the indicating regions may indicate the same pieces of timing information as those indicated on the front surfaces. In this case, for example, the pieces of timing information can be easily checked from both sides, a front side and a back side, of a book to which the sticky note 1 or 7 is affixed. Alternatively, the back surfaces of the sticky notes 1 and 7 may be each provided with the same indicating regions as those on the front surfaces of the sticky notes 1 and 7, and the indicating regions may indicate pieces of timing information that are different from those indicated on the front surfaces. For example, while the indicating regions on the front surface indicate the start time point "1" as well as the pieces of timing information "29," "8," and "2," the indicating regions on the back surface may indicate the start time point "2" as well as the pieces of timing information "30," "9," and "3." In this case, a learner can use the front surface and the back surface separately as appropriate in accordance with a timing at which the learner starts learning. That is, this case enables, for example, a usage in which the learner uses the front surface side in the case of starting the learning on the first day at the beginning of a month and uses the back surface side in the case of starting the learning on the second day.

In the case where the indicating regions for pieces of timing information are also provided on the back surface side as described above, an indicating region at a rear-end portion on the back surface side (a region that indicates a start time point of learning) is reduced by a region to which adhesive is applied. However, the reduction can be dealt with by adjusting a position and a size of a number that shows the start time point or, conversely, by reducing the region to which adhesive is applied. Alternatively, the start time point need not be provided. That is, the indicating region at the rear-end portion need not be provided.

Note that the embodiments described above can be combined as appropriate to provide another embodiment. For example, the sticky-note application 41 in the computer system according to Embodiment 3 may identify the indicating regions for pieces of timing information based on the frame borders 10c to 13c described above and may recognize numbers in the indicating regions as the pieces of timing information. In addition, it is possible to provide a configuration in which perforations and lines are mingled together (e.g., a configuration in which the indicating regions are demarcated by one perforation and two lines, etc.).

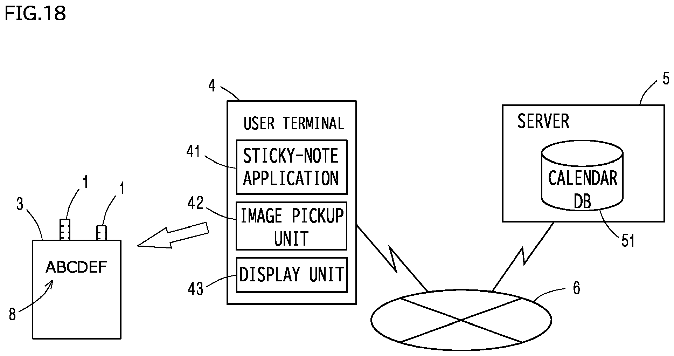

In Embodiment 3 described above, the sticky-note application 41 may obtain and make efficient use of information indicated by an adherend of the sticky note 1 (a book, etc.) (hereinafter, will be referred to as "adherend information") together with the pieces of timing information. For example, in the case where title information 8 on the book 3 is indicated as the adherend information on a cover of the book 3 as illustrated in Figure 18, the user terminal 4 that executes the sticky-note application 41 obtains a picked-up image including the pieces of timing information and the title information 8 using the image pickup unit 42, extracts the title information 8 together with the pieces of timing information by performing image processing on the picked-up image, and sends the pieces of timing information and the title information 8 to the server 5. In this case, the server 5 associates the pieces of timing information with the title information 8 and stores them in the calendar DB 51. Afterward, in response to a request from the user terminal 4, the server 5 sends calendar information including the pieces of timing information and the title information 8 to the user terminal 4. The user terminal 4 displays the calendar information on the display unit 43. At this time, the calendar information includes the pieces of timing information and the title information 8, and the display unit 42 displays the title information 8 in an associated manner with the pieces of timing information. By referring to this display, the learner can easily grasp, for example, what book to perform a review shown by the pieces of timing information.

In the above description, the title information 8 on the book 3 is exemplified as the adherend information obtained by the sticky-note application 41. However, this is not limiting. For example, the sticky-note application 41 may obtain character information such as a page number or a chapter number shown in text of the book 3. In the case where the adherend is a print material, the sticky-note application 41 may obtain various types of character information for identifying the print material. Alternatively, the sticky-note application 41 may obtain, as the adherend information, image information on a cover, text, or the like of the book 3, the print material, or the like.

In the case where the sticky-note application 41 obtains the character information as described above, the character information may be obtained with an input device such as a touch panel included in the user terminal 4, rather than with the image pickup unit 42. The user terminal 4 may manage the character information together with the pieces of timing information, rather than sending the character information to the server 5. That is, the sticky-note application 41 that obtains the character information as described above may be a program that causes the user terminal 4 to perform the calendar management by itself, rather than a program that performs the calendar management in cooperation with the server 5.

In Embodiment 3 described above, the sticky-note application 41 may have a function of recognizing a state of progress of reviews by obtaining the pieces of timing information repeatedly. A learner who grasps a timing for a review with the display by the sticky-note application 41 performs the review when the timing comes, and then separates a separable portion indicating the timing from the sticky note 1. At this time, the user terminal 4 executing the sticky-note application 41 obtains, using the image pickup unit 42, a picked-up image of the sticky note 1 affixed to the book 3, performs image processing on the obtained picked-up image to extract pieces of timing information indicated by the sticky note 1, and sends the pieces of timing information to the server 5. In this case, using pieces of timing information received last time and the pieces of timing information received this time, the server 5 can recognize the state of progress of reviews. For example, comparing the two sets of pieces of timing information, the server 5 finds that the separable portion has been separated from the sticky note 1 and thus can recognize that the review has been performed as scheduled. The server 5 provides a result of the recognition to the user terminal 4 executing the sticky-note application 41, thereby allowing the learner to check the user's state of progress of reviews on the user terminal 4.

Naturally, in the case where the pieces of timing information are sent to the server 5 at the time of a review as described above, the pieces of timing information may be obtained with an input device such as a touch panel included in the user terminal 4, rather than with the image pickup unit 42. Alternatively, rather than sending the pieces of timing information to the server 5, the user terminal 4 may recognize the state of progress of reviews based on the pieces of timing information and pieces of timing information obtained last time in the same manner as described above and may display a result of the recognition. That is, the sticky-note application 41 that repeatedly obtains the pieces of timing information as described above may be a program that causes the user terminal 4 to perform the calendar management by itself, rather than a program that performs the calendar management in cooperation with the server 5.

Note that the calendar information managed by one sticky-note application 41 may be checked with another sticky-note application 41. For example, calendar information including pieces of timing information that are obtained by operation of one sticky-note application 41 by a learner may be checked by a parent of the learner or the like with another sticky-note application 41. In this case, for example, the server 5 is to send the calendar information to a user terminal 4 executing a sticky-note application 41 that is used by a specific user who is associated in advance with the learner (the parent of the learner, etc.). In this manner, a person other than a learner may check calendar information on the learner with another means such as e-mail, rather than checking the calendar information with a sticky-note application 41. In this case, for example, the server 5 is to send an e-mail including the calendar information to a specific user who is associated in advance with the learner.

### Reference Signs List

- 1: sticky note for learning
- 10: sticky-note body
- 11: first separable portion
- 12: second separable portion
- 13: third separable portion
- 11a, 12a, 13a, 14a to 14c: perforation
- 10b, 11b, 12b, 13b: indicating region
- 10c, 11c, 12c, 13c: frame border
- 15: line
- 2: sticky-note set for learning
- 20: board
- 3: book
- 4: user terminal
- 41: computer program (sticky-note application)
- 42: image pickup unit
- 43: display unit
- 5: server
- 51: calendar DB
- 6: Internet
- 7: sticky note for learning
- 70: sticky-note body
- 71: first indicating-region portion
- 72: second indicating-region portion
- 73: third indicating-region portion
- 75: line
- BM: bookmark

## Claims

1. A sticky note for learning comprising
a sticky note including a plurality of indicating regions that is visible in a state where the sticky note is affixed to an adherend, wherein
the indicating regions indicate respective pieces of timing information that show different timings as timings for reviews after learning.

2. The sticky note for learning according to claim 1, wherein the indicating regions each indicate a piece of timing information that shows a lapse time point from a start time point of learning.

3. The sticky note for learning according to claim 1 or 2, wherein
the sticky note includes a sticky-note body and a plurality of separable portions that is coupled to the sticky-note body, the separable portions being separable one by one from the sticky-note body, and
the separable portions include the respective indicating regions.

4. The sticky note for learning according to claim 3, wherein the indicating region of each separable portion indicates a piece of timing information that shows a timing later than a timing shown by a piece of timing information indicated by the indicating region of the separable portion that is to be separated earlier than the each separable portion.

5. The sticky note for learning according to claim 3 or 4, wherein the separable portions are arranged in order in a longitudinal direction of the sticky note for learning, and a length of the sticky note for learning is shortened as the separable portions are separated one by one.

6. The sticky note for learning according to any one of claims 3 to 5, wherein the separable portions are each separable with a perforation.

7. The sticky note for learning according to claim 1 or 2, wherein
the indicating regions are demarcated by guides for folds,
by folding the sticky note downward sequentially along the folds, the indicating regions are made invisible one by one accordingly, and
each indicating region indicates a piece of timing information that shows a timing later than a timing shown by a piece of timing information indicated by the indicating region that is made invisible earlier than the each indicating region.

8. The sticky note for learning according to claim 7, wherein
the indicating regions are arranged in order in a longitudinal direction of the sticky note for learning, and
a length of the sticky note for learning is shortened as the sticky note is folded downward sequentially along the folds.

9. A sticky-note set for learning comprising
a plurality of the sticky notes for learning according to any one of claims 1 to 8, wherein
the sticky notes for learning are arranged being visible and each have the indicating regions indicating the pieces of timing information that show timings different from one another.

10. A computer program that causes a computer to read information indicated by a sticky note for learning, wherein
the sticky note for learning includes a sticky note including a plurality of indicating regions that is visible in a state where the sticky note is affixed to an adherend,
the indicating regions indicate respective pieces of timing information that show different timings as timings for reviews after learning, and
the computer program causes the computer to function as:
a receiving unit that receives an input of the pieces of timing information indicated by the indicating regions; and
a display unit that displays the received pieces of timing information.

11. The computer program according to claim 10, wherein
the computer includes an image pickup device, and
the receiving unit receives the input by reading, using the image pickup device, the pieces of timing information indicated by the indicating regions.

12. The computer program according to claim 10 or 11, further causing the computer to function as a sending unit that sends the received pieces of timing information to an external device.

13. The computer program according to claims 10 to 12, wherein
the receiving unit further receives an input of adherend information that is indicated by the adherend, and
the display unit displays the received adherend information in an associated manner with the pieces of timing information.

14. The computer program according to claims 10 to 13, wherein
the receiving unit repeatedly receives an input of the pieces of timing information, and
the computer program further causes the computer to function as a recognizing unit that recognizes a state of progress of a review based on a plurality of the received pieces of timing information.
